Europäisches Patentamt

European Patent Office

Office européen des brevets

(11) Publication number : **0 496 695 A2**

# EUROPEAN PATENT APPLICATION

(21) Application number : **92630005.4**

(22) Date of filing : **09.01.92**

(51) Int. Cl.⁵ : **B29C 67/14, B64C 27/33**

(30) Priority : **15.01.91 US 641237**

(43) Date of publication of application :
**29.07.92 Bulletin 92/31**

(84) Designated Contracting States :
**DE FR**

(71) Applicant : **UNITED TECHNOLOGIES CORPORATION**
**United Technologies Building 1, Financial Plaza**
**Hartford, CT 06101 (US)**

(72) Inventor : **Doolin, Leonard J.**
**20 Lantern Park South**
**Southbury, Connecticut 06488 (US)**
Inventor : **Poulin, Stephen V.**
**30 Taft Street**
**Stratford, Connecticut 06497 (US)**
Inventor : **Noehren, William L.**
**32 Jade Tree Lane**
**Trumbull, Connecticut 06611 (US)**

(74) Representative : **Weydert, Robert et al**
**Dennemeyer & Associates Sarl P.O. Box 1502**
**L-1015 Luxembourg (LU)**

(54) **A unitary, multi-legged helicopter rotor flexbeam made solely of composite materials and the method of manufacturing same.**

(57)   The multi-legged, preferably five, helicopter rotor flexbeam (10) is of one-piece construction and made solely of composite material, and including full length plies (62, 68, 72, 82, 88) of unidirectional high strength fibers extending from a first leg (64, 66, 70, 74, 76) and splitting in passing through the hub portion (18) of the flexbeam (10), and then extending into two substantially diametrically opposite legs, and having cross and unidirectional plies interspersed between the full length plies (62, 68, 72, 82, 88) to effect the desired taper and shape of the hub portion (18) and legs (64, 66, 70, 74, 76).

fig. 4

EP 0 496 695 A2

This application contains similar material to an application filed on even date herewith identified as U.S. Patent Application No. (S-4398) entitled "Method of Manufacturing a Unitary, Multi-Legged Helicopter Rotor Flexbeam Made Solely of Composite Materials" and invented by Geoffrey C. Davis.

## Technical Field

This invention relates to a multi-legged flexbeam for a bearingless flexbeam helicopter rotor, which flexbeam is of one-piece construction and made solely of composite materials, and includes full length plies of unidirectional high tensile strength fibers extending from a first leg and splitting in passing through the hub portion of the flexbeam, and then extending into two substantially diametrically opposed legs, and having both cross plies and unidirectional plies interspersed between the full length plies to effect the desired taper and shape of the flexbeam hub and legs, and a method of manufacturing such a flexbeam.

## Background of the Invention

In the flexbeam helicopter rotor art, helicopter rotors have traditionally been made so that the flexbeam extends from one blade through the hub and into a diametrically opposed blade, such as shown in European Patent No. 155,444 dated September 25, 1985, or of the four-bladed cross-beam variety in which two diametrically opposite blades are joined by a first flexbeam which forms at least a portion of the hub when it crosses a second flexbeam which is perpendicular to the first flexbeam and supports the other two diametrically opposed blades, such as in U.S. Patent No. 4,746,272 to Noehren et al, dated May 24, 1988.

However, this invention is directed to the fabrication of such a flexbeam for use with a helicopter rotor having at least three blades and preferably five blades, known as the assignee's PENTAFLEX™ rotor, the legs of which extend substantially radially from the rotor axis of rotation and the axis of a central aperture in the flexbeam, and which are equally spaced circumferentially about that axis.

The flexbeam prior art with its diametrically opposed blades offers no solution as to how to fabricate a unitary five-legged flexbeam made solely of composite material and fabricated so that it is capable of withstanding all rotor centrifugal, torsional, in-plane and flapping loads, and is also capable of accommodating the required pitch change, lead-lag and flapping blade motions.

## Disclosure of the Invention

Therefore, it is an object of this invention to teach a multi-legged flexbeam, preferably including five legs which extend radially from a central axis and are positioned equi-angularly circumferentially thereabout so as to be usable with a five-bladed rotor and thereby achieve the reduced vibration and reduced acoustic signature advantages thereof, and which is fabricated solely of composite material so as to achieve the light weight, ballistic tolerance, and ease of manufacture and reduced cost advantages thereof, and also teach a method of manufacturing such a flexbeam.

It is a further object of this invention to teach such a flexbeam in which each leg is of simple rectangular cross-section with its major dimension located in a plane perpendicular to the central axis, and which has areas of maximum thickness, and therefore maximum strength, at both the leg radial inner end which joins to the hub, and at the leg radial outer end so as to be able to receive and react loads imposed by connecting bolts passing therethrough. The flexbeam includes an area of minimal cross-sectional area between the increased cross-sectional station at each leg radial inner and outer ends so that the flexbeam can react lead-lag and flapping motions of the blade which it will support, and also teach a method of manufacturing such a flexbeam.

It is a further object of this invention to teach such a flexbeam which consists of at least one full length ply of unidirectional high tensile strength fibers extending for the full width and from the outer periphery of each leg and extending radially inwardly therefrom and splitting as it passes through the flexbeam hub section to form a Y-shape with one of the legs of the Y so split extending for the full length and half the width of one substantially diametrically opposed leg, while the other leg of the Y so split extends for the full length and half the width of a second substantially diametrically opposed leg such that centrifugal loads encountered in each leg will be passed by the full length ply of unidirectional fibers into two substantially diametrically opposite legs, and also teach a method of manufacturing such a flexbeam.

It is a further object of this invention to teach such a flexbeam in which there are a plurality of such full length plies of unidirectional fibers used in the fabrication of the flexbeam, and in which there are a plurality of taper plies interspersed therebetween with some such taper plies extending from the hub radially outwardly in each blade, and other such taper plies extending from the radially outer end of each leg radially inwardly so as to define the desired taper of each leg and hub of the flexbeam and so as to cooperate with the full length plies to establish the maximum cross-sectional areas of the flexbeam at the hub, and at the inner and outer ends of the leg, and also teach a method of manufacturing such a flexbeam.

It is still a further object of this invention to teach a flexbeam in which at least some of the aforementioned taper plies are cross-ply to the unidirectional plies, and in which other of the taper plies are laid up of unidirectional material in the same fashion as the full length plies but terminating at selected stations along the flexbeam leg lengths to cooperate with the cross-ply taper plies and the full length unidirectional plies in establishing the desired flexbeam contour, and also teach a method of manufacturing such a flexbeam.

It is still a further object of this invention to teach a multi-legged flexbeam in which the taper plies are of selected length and terminate at selected stations in relation to the other taper plies so as to avoid the creation of resin pockets in the flexbeam, and also teach a method of manufacturing such a flexbeam.

It is still a further object of this invention to teach a flexbeam in which the ply lay-up thickness of unidirectional plies at the flexbeam hub is just twice the ply lay-up thickness of unidirectional plies in the flexbeam legs, and also teach a method of manufacturing such a flexbeam.

It is still a further object of this invention to teach a multi-legged flexbeam, which is fabricated solely of composite materials so as to achieve the advantages of ballistic survivability and the benign failure mode detectable by visual inspection offered by composite materials, and also teach a method of manufacturing such a flexbeam.

It is still a further object of this invention to teach a multi-legged flexbeam such that the centrifugal loads are maintained within the composite structure, rather than being reacted by the metallic structure of the rotor hub, and also teach a method of manufacturing such a flexbeam.

It is still a further object of this invention to teach a multi-legged flexbeam in which the matrix of the composite material is either a thermoplastic or thermoset material, and also teach a method of manufacturing such a flexbeam.

It is still a further object to teach a multi-legged flexbeam in which the hub portion has parallel top and bottom flat surfaces, and in which each leg has two bolt holes extending therethrough adjacent the hub which cooperate with similar bolt holes in the other legs to form a ring of bolt holes which receive and cooperate with upper and lower clamp plates to thereby provide redundant retention of the flexbeam so that the failure of one of the connecting bolts in one of the legs can be tolerated, and also teach a method of manufacturing such a flexbeam.

It is a further object of this invention to teach a multi-legged flexbeam in which filler plies are placed between the interstices of the full length plies so that each ply progresses smoothly and without indentures or kinks in passing through the hub area during composite material lay-up and in operation of the flexbeam, and also teach a method of manufacturing such a flexbeam.

It is a further object of this invention to teach a multi-legged flexbeam that has ballistic survivability in that if certain fibers were ruptured due to ballistic penetration, there are many other fibers which would coact to carry the load, and therefore there would not be a catastrophic failure as could be the case if the flexbeam were made of metal, and also teach a method of manufacturing such a flexbeam.

Other objects, features and advantages of the invention will become apparent in light of the following description thereof.

**Brief Description of the Drawings**

Fig. 1 is a perspective showing of our five-legged flexbeam.

Fig. 2 is a partial showing, partially broken away, illustrating our five-legged flexbeam in its helicopter rotor environment.

Fig. 3 is a showing of the initial lay-up steps of the composite material which will form our five-legged flexbeam.

Fig. 4 is similar to Fig. 3 but shows the composite material lay-up at a later stage in the lay-up process, but confined to the lay-up of full length plies of composite material comprising unidirectionally extending high tensile strength fibers with filler plies of similar construction filling in the interstices therebetween.

Fig. 5 is an illustration of the lay-up of the taper cross plies used in the fabrication of our five-legged flexbeam.

Fig. 6 is an illustration of the method of lay-up of the taper plies having unidirectionally high tensile strength fibers therein.

Fig. 7 is a cross-sectional showing through one of the legs of our flexbeam to show the lay-up of the plies in our preferred embodiment.

**Best Mode for Carrying Out the Invention**

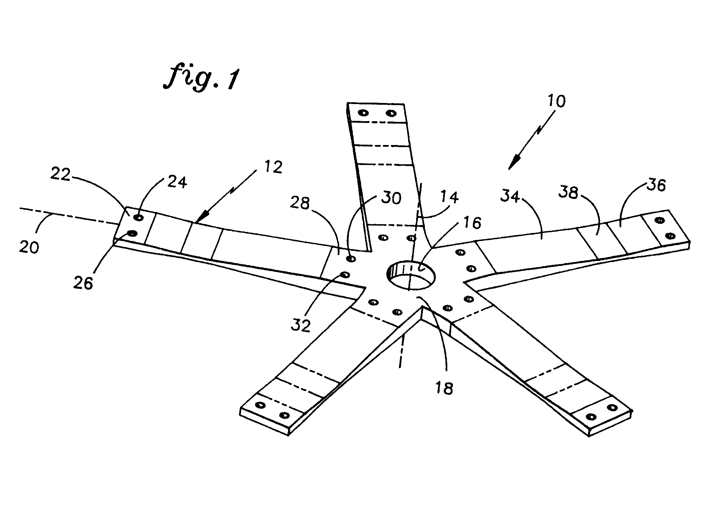

Fig. 1 shows such a multi-legged flexbeam 10 of one-piece construction and consisting of a plurality of preferably five legs, such as 12, which are equally spaced circumferentially about the axis 14 of the flexbeam central aperture 16, and which will be coincident with the rotor axis of rotation. It will be noted that the flexbeam includes a hub portion 18 which is concentric about axis 14 and has legs 12 extending radially outwardly therefrom. Each leg 12 has a substantially radial axis or centerline 20, about which it is symmetrical, and the radial axes of all legs 12 lie in a common plane perpendicular to axis 14 or in a common shallow angle cone with axis 14. Each leg 12 is fabricated such that it has a region 22 of substantial cross-sectional area and hence structural integrity at the radially outer end thereof. Bolt holes 24 and 26 extend through region 22 and receive connecting bolts which serve to connect the flexbeam 10 to the helicopter rotor blade. Similarly, hub 18 and the inboard ends 28 of legs 12 are of substantial cross-sectional area. Bolt holes 30 and 32 extend through the inboard end 28 of each leg 12 to form a ring of bolt holes. It will be noted that each leg 12 includes section 34 which tapers in a radially outward direction from blade inboard end 28 and also includes section 36 which tapers radially inwardly from blade outboard end 26. Tapered sections 34 and 36 terminate on opposite sides of minimal cross-sectional station 38 of leg 12. This minimal cross-sectional area 38 permits flexbeam 10 to move in pitch change, lead-lag and flapping motion with the helicopter blade which it supports.

Each leg is of simple rectangular cross-sectional shape at each station throughout its length, and with the larger dimension of the rectangle extending in the plane of blade radial axes 20. This rectangular cross-sectional shape provides the advantage of ease of manufacture. In the alternative, the legs 12 may be rotated about their radial axis 20 to create a pretwist configuration.

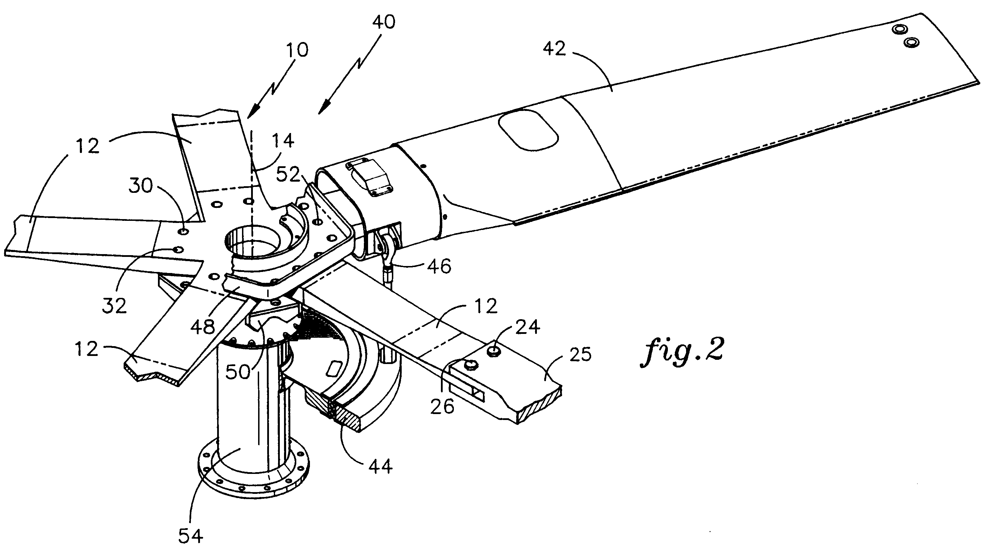

To appreciate the requirements which our multi-legged flexbeam must satisfy, attention is now directed to Fig. 2 which shows the multi-legged flexbeam 10 in a portion of its helicopter rotor environment. Bearingless flexbeam helicopter rotor 40 includes the five-legged flexbeam 10, whose legs 12 extend radially outwardly from axis of rotation and central aperture axis 14. The outer end of each leg 12 is connected in a conventional fashion to a helicopter blade 25 by connecting bolts which extend through apertures 24 and 26. In conventional fashion (not shown), blade 25 is connected to torque tube 42. Torque tube 42 is connected to swashplate 44 through pitch control rods 46, such that each blade 25 can be caused to change pitch in response to the motion of swashplate 44 acting through pitch control rod 46 and torque tube 42. Upper clamp plate 48 is positioned on the top surface of flexbeam 10, while lower hub plate 50 is positioned on the lower surface of flexbeam 10. Each of these clamp plates includes a plurality of bolt holes 52, through which a circumferential array of connecting bolts extends to connect the two plates 48 and 50 to flexbeam 10, and hence connect flexbeam 10 to the rotor drive shaft (not shown), but which is enveloped by mast 54, and which causes the rotor 40 to rotate about axis 14.

It will therefore be seen that during operation of rotor 40, all flapping loads, all in-plane loads and all torsional loads from each blade 42 is imparted to and must be reacted by flexbeam 10. Further, flexbeam 10 must be capable of accommodating pitch change, lead-lag and flapping motions of the blades 42. It will further be noted that with this construction, if a single connecting bolt 30 or 32 passing through flexbeam leg 12 inner ends is ruptured, the coaction of the two clamp plates 48 and 50, and the other bolts will serve to continue to position the blade which is connected to the particular flexbeam leg which held the failed bolt.

Further features of the construction of flexbeam 10 will become apparent upon considering the following description of our method of manufacturing such a flexbeam.

In our early attempts to fabricate such a flexbeam, we considered laying a full length ply for the full width of a first leg and then following across the central hub portion into a single substantially diametrically opposed leg. This construction was not acceptable because it caused additional buildup of unidirectional plies in the center of the hub of a ratio of 2.5:1 with respect to the legs, and would result in weakening of the hub when an aperture had to be drilled therethrough to accept wiring and other mechanisms which must pass through the hub. This is avoided in our construction in that in bifurcating in passing through the hub area, our full length plies define an aperture in the center of the hub, which may not have to be enlarged and, therefore, need not be weakened by the severing of fibers in any type of a hole drilling operation.

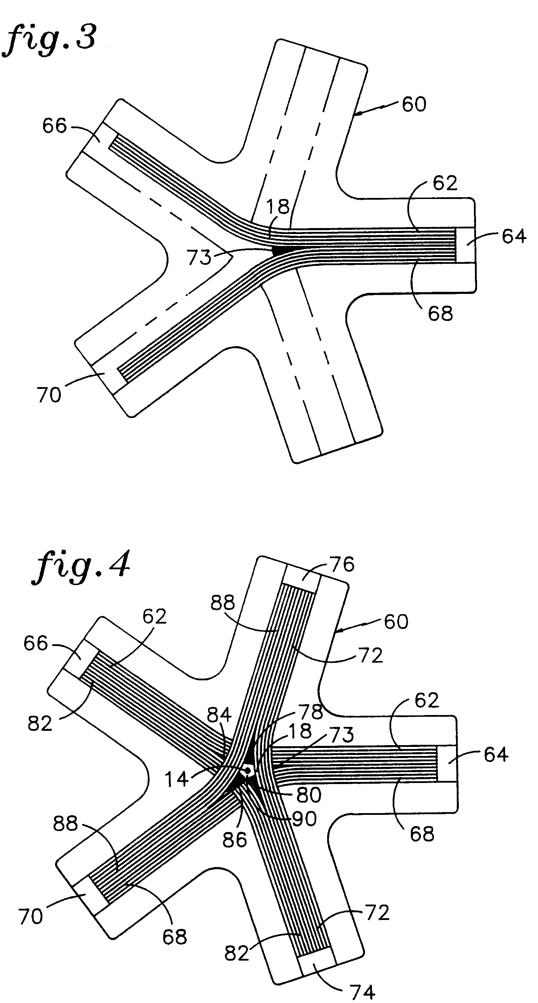

For a description of the method of manufacture taught herein of our multi-legged flexbeam, attention is now directed to Fig. 3.

A tool member 60, whose inner periphery defines the precise shape desired for the multi-legged flexbeam 10 is provided.

The method of laying up the various plies of composite material will now be described.

Viewing Fig. 3, ply 62, which consists of a plurality of unidirectionally extending high tensile strength fibers, such as fiberglass, graphite or KEVLAR® (Trademark of E.I. DuPont), extends from the radially outer end of tool leg 64 radially inwardly and in close proximity to what will become hub portion 18 and then extends radially outwardly for the full length of a second tool leg 66. It should be noted that leg 66 is in substantial radial alignment with and diametrically opposed to leg 64, and that ply 62 occupies one-half of the width of legs 64 and 66. Since a ply such as 62 will be extending the full length of the flexbeam, they will be referred to as a full length ply.

A second full length ply consisting of unidirectional high tensile strength fibers is laid-up in leg 64 so as to occupy the other half of the width thereof and extend radially therealong and through what will become hub portion 18 and then radially outwardly into a second leg 70 which is also substantially diametrically opposed to leg 64. It will therefore be seen that plies 62 and 68 cooperate to provide a full width ply for leg 64, and split or bifurcate at the end of leg 64 in passing through hub section 18, and ply 62 occupies one half the width of one substantially diametrically opposed leg 66, while ply 68 occupies one half the width of a second substantially diametrically opposed leg 70. It will therefore be evident that once flexbeam 10 is completed, any load imposed upon the high tensile strength fibers in plies 62 and 68 in leg 64 will be imparted by those high tensile strength fibers to the corresponding high tensile strength fibers in legs 66 and 70. This is the type of load which will be imposed by the centrifugal force generated by the blade during rotor operation. At this point, a filler ply of unidirectionally extending ply 73 is positioned in the interstices formed by the separation of plies 62 and 68 adjacent to hub 18. The purpose for filler ply 73, and the other filler plies to be described hereinafter, is to form a smooth surface with the adjacent plies 62 and 68 so that the next ply to be laid-up thereover will have a smooth surface to lay against, and will not be indented or kinked in the interstices filled by filler ply 73, which could be the case without filler ply 73 being present. Such kinks would create stress concentrations in the fiber ply during rotor operation.

Now viewing Fig. 4, we will describe the continuation of the lay-up process. Full length ply 72 is then laid up in leg 74 to occupy one half of the width thereof, and extend radially inwardly therein through hub portion 18 into one substantially diametrically opposed leg 76, then filler plies 78 and 80 are laid up, followed by full length ply 82, which occupies the other half of the width of leg 74, and cooperates with ply 72 to extend the full width of leg 74 and extends radially inwardly therefrom in close proximity through hub portion 18 and then radially outwardly in leg 66 to occupy one half of the width thereof, and cooperate with ply 62 to occupy the full width of leg 66. Filler plies 84 and 86 are then laid up. Finally full length ply 88 is laid up commencing at the radially outer end of leg 70 to occupy one half the width thereof and cooperate with full length ply 68 to occupy the full width thereof, and extending radially inwardly within leg 70 to pass through hub portion 18 and radially outwardly into leg 76 to cooperate with ply 72 to fill the full width of leg 76.

It will therefore be seen that to this point, we have produced a full ply of undirectional high tensile strength fibers extending the full width of each leg, and extending radially inwardly within that leg and passing through the hub portion 18 where it splits and enters two substantially diametrically positioned legs, and that this occurs in each leg of the flexbeam. It will further be noted that in passing through hub section 18, each ply, due to the inclusion of the filler plies, passes over a flat surface, thereby avoiding kinking or indentations in the plies. Still further, the full length plies, in passing through hub section 18, pass in close proximity to, but not through axis 14, so as to define aperture 90 around axis 14, through which electrical connections or other mechanisms may extend.

The lay-up described at this point in connection with Fig. 4 will be utilized in the fabricating of the top and bottom skins of flexbeam 10, and in forming several intermediate layers therebetween, as described hereinafter.

With the first series of full length ply fully laid up as described in connection with Figs. 3 and 4, we are now ready to lay up additional plies which will be positioned and shaped to effect the tapering and shape of the flexbeam at sections 22, 28, 34, 36 and 38, as well as hub 18 thereof, as shown in Fig. 1. We will call these taper plies.

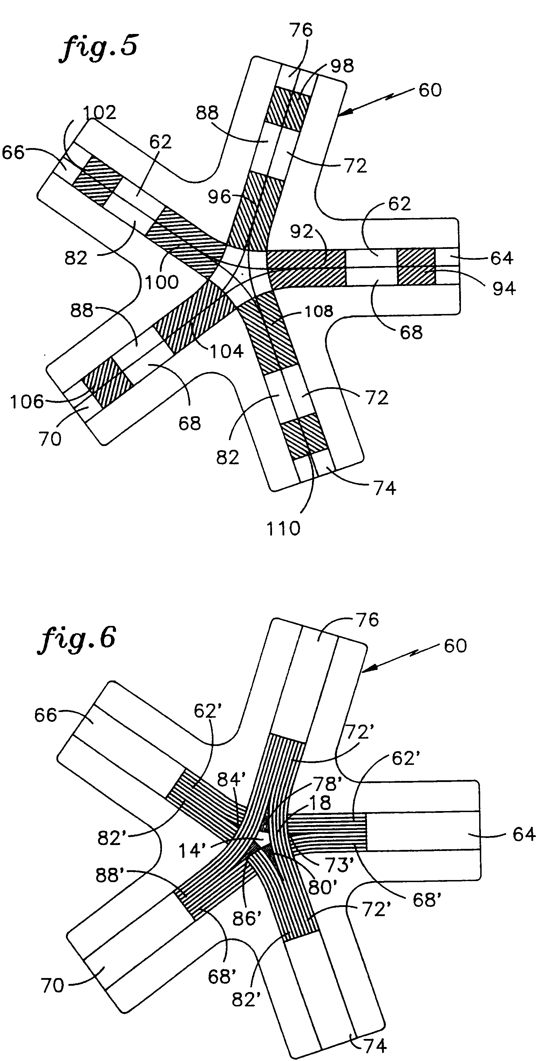

As best shown in Fig. 5, a first taper ply 92 is laid up on the initial full length lay-up described in connection with Figs. 3 and 4. It will be noted that ply 92 is shaped to fill the full width of slot 64 and to abut full length ply 72 at its inner end and extend radially outwardly therefrom to terminate at a selected station along the length of arm 64. At the same time, a second taper ply 94 will be laid up commencing at the radially outer end of leg 64 and in alignment with the outer end of plies 62 and 68 and extend radially inwardly while extending across the full width of leg 64 and terminating at a selected station therealong short of taper ply 92. Similarly, taper plies 96 and 98 may be laid up in leg 76, taper plies 100 and 102 may be similarly laid up in leg 66, taper plies 104 and 106 may be laid up in leg 70, and taper plies 108 and 110 may be laid up in leg 74. Taper plies 92 through 110 are preferably cross ply having fibers extending at an angle of about 45° with respect to the unidirectional fibers in unidirectional plies 62 through 88.

Now a second layer of unidirectional full length plies may be laid up, as previously described in connection with Figs. 3 and 4, followed by a second layer of filler plies corresponding to filler plies 92 through 110 described in connection with Fig. 5 but preferably being cross ply with the unidirectional fibers thereof forming an angle of -45° with the unidirectional plies 62 through 88.

During the course of lay-up, taper plies of unidirectional fibers will be used and their lay-up as illustrated in Fig. 6. In viewing Fig. 6, since the lay-up procedure is precisely the same as previously described in connection with Figs. 3 and 4, the same reference numerals will be used to identify the plies, but a prime mark (′) will be added thereto.

Each of the taper plies, now to be described, comprise a plurality of unidirectional high tensile strength fibers oriented to extend in the direction of the leg which they occupy. As shown in Fig. 6, plies 62′ and 68′ occupy the full width of leg 64 and extend therefrom in bifurcated fashion into substantially diametrically opposite legs 66 and 70. Plies 72′ and 82′ similarly occupy the full width of leg 74 and extend therefrom through the hub portion 18 in close proximity to axis 14 into substantially diametrical legs 66 and 76. In similar fashion, plies 88′ and 68′ occupy the full width of leg 70 and extend radially inwardly therein in close proximity to axis 14 and into substantially diametrically opposed legs 64 and 76. Filler plies, such as 73′, 78′, 84′, 86′ and 80′, as previously described in connection with Figs. 3 and 4, are laid up in connection with the Fig. 6 lay-up to fill the interstices between the unidirectional taper plies in the same fashion as with the Figs. 3 and 4 lay-up. It will therefore be noted that the lay-up just described in connection with the Fig. 6 taper plies is identical with the lay-up previously described in connection with the full length plies described in connection with Figs. 3 and 4, except that the plies are of shorter length and cooperate with the taper plies 92, 96, 100, 104 and 108 shown in Fig. 5 to define the taper portion 34 of the flexbeam legs 12.

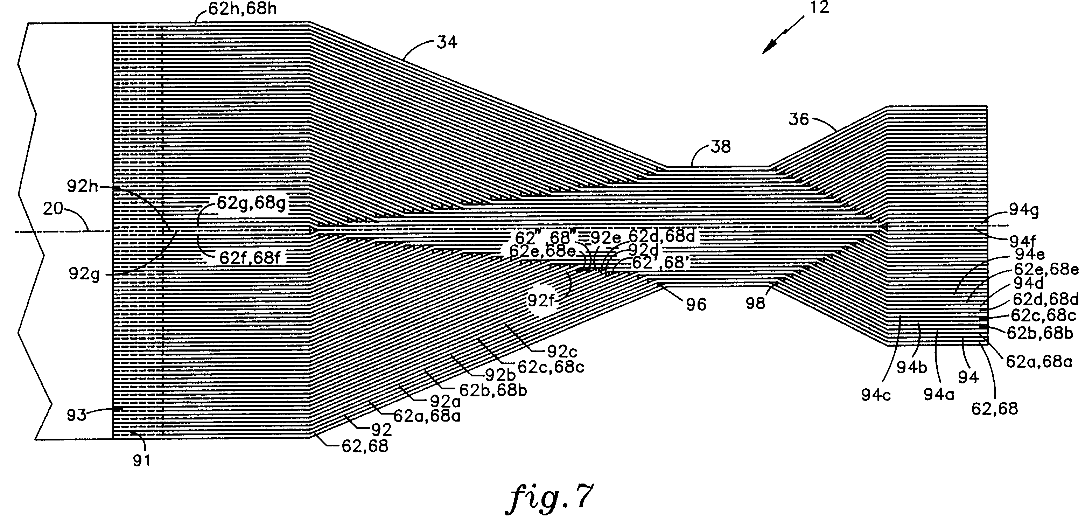

While it will be evident that the sequence of lay-ups just described may be performed in several different orders, depending upon the configuration and the load carrying and motion accommodating demands to be made of the flexbeam to be fabricated, our preferred embodiment is shown in Fig. 7.

Fig. 7 will be described as it relates to the lay-up of flexbeam leg 12 occurring in leg 64 of the tool 60, however, it should be borne in mind that similar lay-ups are occurring at the same time in all other legs of the flexbeam. As shown in Fig. 7, the bottom layer is formed by full length plies 62 and 68 as described in connection with Figs. 3 and 4. Plies, such as 91 and 93, are unidirectional full length or unidirectional taper plies from other legs 12 of flexbeam 10. The next layer working from the bottom is formed by taper plies 92 and 94. The next ply to be laid up as described in connection with Figs. 3 and 4 is also a full length ply and will be identified as 62a, 68a. The next lay-up will be taper plies corresponding to 92 and 94 of Fig. 5, but shorter in length and identified as 92a and 94a. In our preferred embodiment shown in Fig. 7, the next ply to be laid-up is a full length ply identified as 62b, 68b. The next ply to be laid-up as described in connection with Fig. 5 is taper plies identified as 92b and 94b. This will be followed by a full length ply 62c, 68c. Preferably, to this point and throughout the lay-up, alternate taper plies will be cross plies of +45° and -45° fibers with respect to the unidirectional fibers of full length plies and the unidirectional taper plies which are to be laid-up next.

It will further be noted that to this point the lay-up procedure has consisted of laying up alternate plies of the full length ply and the taper plies, with each taper ply terminating somewhat short of the previously laid-up taper ply. In view of the fact that the radially inboard end 28 of leg 12 is substantially thicker than the radially outboard end 22 thereof, a greater number of plies will be utilized in forming the inboard end than in forming the outboard end. In our preferred embodiment, from this point on, we will be laying up three taper plies at the radial inboard end to one taper ply at he radial outboard end of the flexbeam leg 12. Accordingly, at the radial inboard end of leg 12, taper ply 92c, then unidirectional taper ply 62′ and 68′, then taper ply 92d, are laid. up upon full length ply 62c, 68c, at the same time that taper ply 94c is laid up at the outboard end of leg 12. Unidirectional taper ply 62′, 68′ will be laid up as described in connection with Fig. 6, while taper plies 92e and 92f will be laid up as described in connection with Fig. 5. Unidirectional full length ply 62d, 68d will then be laid up.

This pattern of a full length unidirectional ply such as 62d, 68d, then a +45° taper ply such as 92e, then a unidirectional taper ply such as 62″ and 68″, then a -45° taper ply such as 92f continue to be laid up at the inboard end of leg 12 until the lay-ups reach the centerline 20 of leg 12. At the outboard end, since there need be less height and cross-sectional area at the outboard end of the flexbeam than to its radial inboard end adjacent the hub 18, the lay-ups consist of alternate layers of +45° taper plies such as 94d, and -45° taper plies such as 94e, laid up on opposite sides of full length unidirectional fiber plies such as 62e, 68e. This pattern of lay-up will be continued until the lay-up reaches the centerline 20 of leg 12, ending with full length unidirectional ply 62f, 68f, taper ply 92g, and taper ply 94f.

It will be noted that at both the inboard end and the outboard end of leg 12, the taper plies are cut or terminated so that the inboard plies are successively shorter than the outboard plies below axis 20 so that there are no substantial voids between ply intersections, for example, at ply intersections 96 and 98. This is important because if there were substantial voids, such as 96 and 98, this would establish resin pockets in the flexbeam legs 12, and these would be areas of minimal strength.

The lay-up procedure for the plies above centerline 20 will be just the opposite to those just described for the lay-up below the axis 20. This results in mirror image or allochiral ply patterns above and below axis 20 so that each leg 12 is symmetric about axis 20.

That lay-up above axis 20 will begin with taper ply 92h, full length unidirectional ply 62g, 68g, and taper ply 94g, and will end with full length unidirectional fiber ply 62h, 68h.

As stated earlier, the various plies are preferably made of fiberglass, graphite or KEVLAR and are preferably all about .020 inches thick.

The plies of flexbeam 10 may be preimpregnated with resin prior to lay-up or may be laid-up dry and then have resin, such as epoxy, injected thereinto when the laid-up flexbeam is positioned within mating fixtures which cooperate to define the shape of the flexbeam 10 so that each leg is of the shape shown in Fig. 7. With respect to the matrix to be used, we prefer either a thermoplastic or a thermoset matrix. Our preferred matrix is a thermoset using an epoxy. If we were to use a thermoplastic matrix, we would probably use PEEK (Polyetheretherkeytone) sold by ICI Composites, Inc. of Wilmington, Delaware, and other companies.

By viewing Fig. 7, it will be observed that each leg 12 of flexbeam 10 consists basically of unidirectional full length plies extending for the full length of each leg 12 and laid-up as described in connection with Figs. 3 and 4, and with selected +45°, -45°, and unidirectional taper plies disbursed selectively therebetween, as described in connection with Figs. 5 and 6, respectively, to cause the multi-legged flexbeam 10 to achieve the desired shape.

As shown in Fig. 7, at the radially inboard end of the leg, the lay-up pattern is such that, except for the outer layers, every fourth ply laid up is a unidirectional full length ply, and at the outboard end of the leg, every second ply laid up is a unidirectional full length ply. This substantial use of the full length plies avoids having large numbers of taper plies cut off somewhere along the length of the flexbeam arm, thereby creating stress concentration at that point.

With the flexbeam rotor 12 laid up as illustrated in Fig. 7, and placed in an appropriate fixture, the flexbeam composite material is cured. We find that the preferred curing process is a combination of temperature and pressure as specified by the resin manufacturer.

With the flexbeam composite material so cured, bolt holes 24, 26, 30 and 32 are then drilled into the opposite ends of each leg 12, and any other necessary machining is done to the flexbeam 10. The two bolt holes at the outer end of the flexbeam legs permit blade folding once one of the connecting bolts is removed. Also, since the blade flapping loads reduce substantially in a radially outboard direction, having the folding action taking place a substantial distance radially outwardly from hub 18 is additionally beneficial.

It is important to note that in our construction, the centrifugal loads imparted by the blade are reacted by the full length unidirectional fibers of the flexbeam leg 12 that supports that blade, and are carried to two substantially diametrically opposed arms on the opposite side of the flexbeam. In this construction, the centrifugal force is imparted to the opposite arms of the flexbeam, rather than all having to be reacted by the connecting bolts which pass through apertures 30 and 32. Further, in view of its high tensile strength capacity, the unidirectional fibers of the full length plies are capable of withstanding substantial blade centrifugal loading, and has the additional advantage of having a benign failure mode which is readily detected visually in that delamination occurs due to the initial breakdown of the composite.

**Claims**

1. The method of manufacturing a unitary flexbeam for a bearingless flexbeam helicopter rotor, which flexbeam is made solely of composite materials and consists of at least three leg members extending radially from a central common hub with a central aperture therein concentric about an axis, and with the leg members spaced equidistant circumferentially about the hub and with each leg being of rectangular cross-section with its larger dimension normal to the hub axis, and with each leg member tapering radially outwardly from the hub at its inboard end and radially inwardly from its outboard end so as to be of substantial cross-sectional area at said ends so as to be able to accommodate bolt holes and so as to define an area of minimal cross-sectional area between the tapered sections, and wherein each leg has a radial axis and is symmetric about a horizontal plane passing through the radial axes of all legs, comprising the steps of:

   a. providing a tool shaped to define the desired shape of the flexbeam.

   b. producing the portion of the flexbeam below the radial axis of each leg comprising the steps of:

      (1) producing a bottom exterior layer of composite material comprising the steps of:

         (a) laying up a full length ply of high tensile strength fibers commencing at the outboard end of a first leg and being of one half the width of the leg, and extending radially inwardly the full length of the first leg and passing in proximity to the flexbeam central aperture axis where it will form part of the hub and then into a second leg which is substantially diametrically opposed to the first leg so as to occupy one half of the width of the second leg and extending to the outboard end thereof,

         (b) laying up a full length ply of high tensile strength fibers commencing at the outboard end of the first leg and occupying the other half of the width of the leg, and extending radially inwardly the full length of the first leg and passing in proximity to the flexbeam central aperture axis where it will form part of the hub and then into a third leg which is substantially diametrically opposed to the first leg so as to occupy one half of the width of the third leg and extending to the outboard end thereof.

         (c) repeating steps b)1)a) and b)1)b) until a full length ply of high tensile strength fiber covers the full width and length of all legs and the hub.

(d) laying up filler plies of composite material shaped to fill the interstices between the full length plies of each leg as they separate in passing in proximity to the flexbeam central aperture axis at the hub so that all full length plies passing over another full length ply passes over a flat surface in passing in proximity to the flexbeam central aperture axis so as to avoid the creation of stress concentrations therein and so that the thickness of the plies surrounding the central aperture axis at the hub is only twice as thick as the plies in each leg.

(e) laying up full length plies of composite material extending for the full length and width of each leg following steps b. 1) a) through b. 1) d) and disbursing therebetween taper plies of composite material and including inboard taper plies and outboard taper plies, and with the taper ply extending from the inboard end of each leg where the taper plies abuts the full length ply extending across the leg, and with the inboard taper ply extending radially outwardly therefrom while occupying the full width of each leg and terminating short of the minimal cross-sectional area, and with the outboard taper ply extending from the outboard end of each leg and extending radially inwardly therefrom while occupying the full width of each leg and terminating short of the minimum cross-sectional area section, and with the length of the inboard and outboard taper plies being progressively shorter as the ply buildup approaches and arrives at the leg radial axis.

c. producing the portion of the flexbeam above the radial axis of each leg comprising the steps of:

(1) repeating the lay-up procedure of step b. 1) e) except that the taper plies will be shortest adjacent the leg radial axis and progressively increase in length as their distance from the leg radial axis increases such that the inboard and outboard plies of the outer most taper ply will terminate just short of the minimum area station.

(2) producing a top exterior layer of composite material following steps b.1)a) through b.1)d).

2. The method according to Claim 1 wherein the plies are preimpregnated with a matrix material.

3. The method according to Claim 2 wherein the matrix material is epoxy.

4. The method according to Claim 1 wherein the full length plies are unidirectional plies including high tensile strength fibers extending unidirectionally in a direction parallel to the leg radial axis.

5. The method according to Claim 4 wherein the taper plies are cross plies including unidirectional high tensile strength fibers extending in a direction forming a substantial angle with the leg radial axis.

6. The method according to Claim 5 wherein certain cross ply fibers form a +45° angle with the leg radial axis and other cross ply form a -45° angle with the leg radial axis.

7. The method according to Claim 6 wherein some of said taper plies consists of undirectionally extending high tensile strength fibers extending in a direction parallel the leg radial axis.

8. The method according to Claim 5 wherein the filler plies include unidirectional high tensile strength fibers extending in the same direction as the full length plies whose interstices they fill.

9. The method according to Claim 5 and including the additional step of curing the plies so laid up.

10. The method according to Claim 9 and including the additional step of fabricating bolt holes at the leg member inner and outer ends.

11. The method according to Claim 10 and including the fabricating of a central aperture in the hub.

12. The method according to Claim 6 wherein each ply is approximately .020 inches thick and the ply fibers made of fiberglass.

13. The method according to Claim 1 and wherein the plies are laid up dry and the matrix material impregnated thereinto thereafter.

14. The method according to Claim 7 wherein said tapered plies are produced by:

a. laying up a ply of high tensile strength fibers commencing at a selected station in a first leg and being of one half the width of the leg, and extending radially inwardly for the remainder of the length of the first leg and passing in proximity to the flexbeam central aperture axis where it will form part of the hub and then into a second leg which is substantially diametrically opposed to the first leg so as to occupy one half of the width of the second leg and extending radially outwardly to a similar selected station therein.

b. laying up a ply of high tensile strength fibers commencing a selected station in a first leg and occupying the other half of the width of the leg, and extending radially inwardly for the remainder of the length of the first leg and passing in proximity to the flexbeam central aperture axis where it will form part of the hub and then into a third leg which is substantially diametrically opposed to the first leg so as to occupy one half of the width of the third leg and extending radially outwardly to a similar selected station therein.

15. A helicopter rotor flexbeam made solely of composite materials and including:

1. a hub section of generally circular shape and concentric about an axis,

2. five-leg members each having a centerline and extending radially outwardly from the hub section and integrally attached thereto and spaced equidistant circumferentially about the hub section, and

3. each leg member comprising a plurality of full length plies of composite material having unidirectional high tensile strength fibers extending along the length of the plies and parallel to the leg member centerline, and said plies extending for the full leg width and from the leg radially outer end radially inwardly toward the leg inner end and then bifurcating into two halves in passing through the hub section with the two halves of the plies respectively extending radially outwardly into the two substantially diametrically opposite legs and extending radially for one half the width of the two substantially diametrically opposite legs to the radial outer ends thereof, and so that the half leg width plies of said two radially opposite legs cooperate with half leg width plies from other leg members to form a full width ply of unidirectional high tensile strength fibers in each leg member with the fibers extending parallel to the leg members centerline, so that each radial load, such as blade centrifugal load, imposed upon the plies in any leg member will be transmitted through the high tensile strength unidirectional fibers therein into the high tensile strength fibers of the two substantially diametrically opposite legs.

16. A helicopter rotor flexbeam according to Claim 15 and including at least one taper ply of composite material positioned between adjacent full length plies and being selectively positioned and sized to cooperate with the full length plies to define the desired shape of the flexbeam.

17. A helicopter rotor flexbeam according to Claim 16 having a plurality of taper plies, including at least one ply of composite material having unidirectional high tensile strength fibers extending in the same direction as the unidirectional fibers of the full length ply, at least one ply having high tensile strength fibers extending at +45° to the unidirectional fibers of the full length ply, and at least one ply having high tensile strength fibers extending at -45° to the unidirectional fibers of the full length ply.

18. A helicopter rotor flexbeam according to Claim 17 wherein the bifurcating plies from each leg member pass through the hub section in spaced relation to the axis thereof so as to define an aperture in the center of the hub.

19. A helicopter rotor flexbeam according to Claim 17 wherein said fibers are fiberglass imbedded in a matrix of cured resin to form such plies.

fig. 1

fig.2

fig.3

fig.4

12

fig.5

fig.6

13

fig. 7